# EUROPÄISCHE PATENTANMELDUNG

(11) **EP 1 355 142 A2**
(43) Veröffentlichungstag der Anmeldung: **22.10.2003**
(21) Anmeldenummer: 03008932.0
(22) Anmeldetag: 16.04.2003
(51) Int. Cl.: G01M 17/02

(54) **Reifenprüfgerät**

(30) Priorität: 16.04.2002 DE 20205944 U
(71) Anmelder: Steinbichler Optotechnik Gmbh, 83115 Neubeuern (DE)
(72) Erfinder: Huber, Rainer, 83451 Piding (DE); Steinbichler, Hans, Dr., 83115 Neubeuern (DE); Leitner, Bernd, 83115 Neubeuern (DE)
(74) Vertreter: Zinnecker, Armin, Dipl.-Ing.

(57) **Zusammenfassung**

Ein Reifenprüfgerät umfasst eine Druckkammer und einen Messkopf (14). Um ein derartiges Reifenprüfgerät zu verbessern, weist das Reifenprüfgerät waagrechte Rollen (4, 5, 6, 7) auf, auf die der Reifen (12) in senkrechter Lage positionierbar ist (Fig. 1).

## Beschreibung

Die Erfindung betrifft ein Reifenprüfgerät mit einer Druckkammer und einem Meßkopf.

Derartige Geräte zum Prüfen von Reifen sind bereits bekannt. Sie weisen einen oder mehrere Meßköpfe auf, durch die der Reifen holographisch oder shearografisch geprüft werden kann. Dabei wird von dem Reifen ein Bild, insbesondere ein Referenz-Interferenzlinienbild aufgenommen. Anschließend wird durch eine leichte negative und/oder positive Druckänderung in der Druckkammer, beispielsweise mit einem typischen Differenzdruck von +/- 50 mbar, eine Verformung des Reifens erzeugt und eine zweite Aufnahme im verformten Zustand des Reifens gemacht. Aus den beiden bei unterschiedlichen Druckzuständen gemachten Aufnahmen kann ein Differenzbild errechnet werden.

Aus dem Differenzbild können die internen Fehlstellen, die eine charakteristische Verformung aufweisen, erkannt werden. Das Differenzbild zeigt die gewünschte Fehlstelleninformation und zusätzlich unerwünschte Gesamtverformungen des Reifens, bedingt durch Relaxationsvorgänge und generelle Formänderungen des Reifens, in Abhängigkeit vom Umgebungsdruck. Außerdem können durch die Druckänderung Luftströmungen hervorgerufen werden, die Vibrationen des Reifens erzeugen können, was ebenfalls zu Störungen führen kann.

Bei den vorbekannten Reifenprüfgeräten wird der Reifen im liegenden Zustand geprüft. Der Reifen wird, auf der Seite liegend, auf einer stabilen, möglichst homogenen Unterlage gelagert. Dadurch ist eine optimale Fixierung des Reifens gewährleistet. Der negative Einfluß der oben erwähnten Störungen wird minimiert.

Diese Technik erfordert allerdings einen nicht unerheblichen Aufwand, um den Reifen im Prüfgerät zu positionieren. Die mechanischen Einrichtungen, die erforderlich sind, um die Reifen aus der in der industriellen Umgebung, beispielsweise in einem Reifen-Runderneuerungsbetrieb, üblichen senkrechten Lage in die waagrechte Lage zu bringen und in das Prüfgerät zu befördern, kosten Geld und benötigen Platz.

Aufgabe der Erfindung ist es , ein Reifenprüfgerät der eingangs angegebenen Art zu verbessern.

Gemäß der Erfindung wird diese Aufgabe dadurch gelöst, daß das Reifenprüfgerät waagrechte Rollen aufweist, auf die der Reifen in senkrechter Lage positionierbar ist. Die Anordnung kann derart getroffen sein, daß der Reifen in annähernd senkrechter Lage positioniert wird.

Vorteilhafte Weiterbildungen sind in den Unteransprüchen beschrieben.

Vorteilhaft ist es, wenn zwei beabstandete Auflager vorgesehen sind.

Für eine oder beide Auflager können jeweils mehrere, vorzugsweise zwei, Rollen vorgesehen sein.

Vorzugsweise sind die Rollen einer oder beider Auflager schwenkbar. Hierdurch kann die Vorrichtung auf einfache Weise an verschiedene Reifengrößen angepaßt werden.

Vorteilhaft ist es, wenn die Rollen außerhalb des Bildausschnitts des Meßkopfes liegen. Durch die Rollen kann der Reifen verformt werden. Wenn die Rollen außerhalb des Bildausschnitts des Meßkopfes liegen, werden die durch die Rollen hervorgerufenen Verformungen des Reifens vom Meßkopf nicht erfaßt.

Der Reifen kann mit seiner Lauffläche auf den Rollen aufliegen. Stattdessen oder zusätzlich kann der Reifen mit seiner Wulst auf den Rollen aufliegen.

Eine weitere vorteilhafte Weiterbildung ist dadurch gekennzeichnet, daß das Prüfgerät eine Türe umfaßt und daß die Rollen in der Türe vorgesehen sind. Die Türe ist vorzugsweise schwenkbar. Vorteilhaft ist es, wenn die Türe um eine vertikale Achse schwenkbar ist, ähnlich wie bei einem Kühlschrank oder sonstigen Schrank. Der Meßkopf befindet sich vorzugsweise in dem Gerät, ist also gerätefest montiert.

In dem Reifenprüfgerät können ein oder mehrere insbesondere waagrechte Förderbänder zur Lagerung des Reifens und/oder zum Transport des Reifens zum Reifenprüfgerät und/oder innerhalb des Reifenprüfgeräts und/oder vom Reifenprüfgerät weg vorgesehen sein, die auch zum Drehen des Reifens dienen können. Es ist allerdings auch möglich, den Reifen feststehend zu lagern, also nicht zu drehen, und stattdessen den Meßkopf entsprechend zu bewegen, insbesondere um den Reifen herum zu drehen.

Nach einer weiteren vorteilhaften Weiterbildung sind eines oder mehrere seitliche Führungselemente für den Reifen vorgesehen. Dies ist insbesondere dann vorteilhaft, wenn der Reifen innerhalb des Reifenprüfgeräts geringfügig geneigt gelagert ist. Die seitlichen Führungselemente können dazu dienen, den Reifen zu fixieren. Sie können ferner dazu dienen, eventuelle Schwingungen zu dämpfen.

Eine weitere vorteilhafte Weiterbildung ist dadurch gekennzeichnet, dass eines oder mehrere Dämpfungselemente vorgesehen sind. Das oder die Dämpfungselemente können mit dem oder den seitlichen Führungselementen identisch sein. Es ist allerdings auch möglich, gesonderte Dämpfungselemente, insbesondere Bänder oder Lappen, vorzugsweise aus unterschiedlichen Materialien, vorzusehen.

Eine weitere vorteilhafte Weiterbildung ist dadurch gekennzeichnet, dass der Messkopf eine oder mehrere Laserlichtquellen, insbesondere Laserdioden, aufweist.

Stattdessen oder zusätzlich können die Laserlichtquellen, insbesondere Laserdioden, vom Messkopf getrennt angeordnet sein. Dies kann insbesondere in der Weise erfolgen, dass der Beleuchtungsstrahl der Laserlichtquellen mit der optischen Achse des Messkopfes bzw. der Bildaufnahmeeinheit des Messkopfes einen Winkel einschließt, vorzugsweise einen Winkel von 0 bis 90°, vorzugsweise 30° bis 60°.

Eine weitere vorteilhafte Weiterbildung ist dadurch gekennzeichnet, daß der Meßkopf zur Prüfung der Lauffläche und/oder der Seitenwand des Reifens verstellbar ist.

In bestimmten Anwendungsfällen ist es vorteilhaft, wenn mehrere Messköpfe vorhanden sind.

Ausführungsbeispiele der Erfindung werden nachstehend anhand der beigefügten Zeichnung im einzelnen erläutert. In der Zeichnung zeigt
- Fig. 1: einen Teil eines Reifenprüfgeräts mit einem Reifen in einer Seitenansicht,
- Fig. 2: den in Fig. 1 dargestellten Teil des Reifenprüfgeräts mit zusätzlicher Angabe der Reihenfolge der Prüfung der Sektoren des Reifens,
- Fig. 3: ein Reifenprüfgerät in einer perspektivischen Ansicht,
- Fig. 4: ein Reifenprüfgerät in einer Seitenansicht,
- Fig. 5: einen Querschnitt durch ein Reifenprüfgerät,
- Fig. 6: das Reifenprüfgerät gemäß Fig. 5 in einer Seitenansicht und
- Fig. 7: eine Abwandlung des in Fig. 5 und 6 gezeigten Reifenprüfgeräts in einer Seitenansicht.

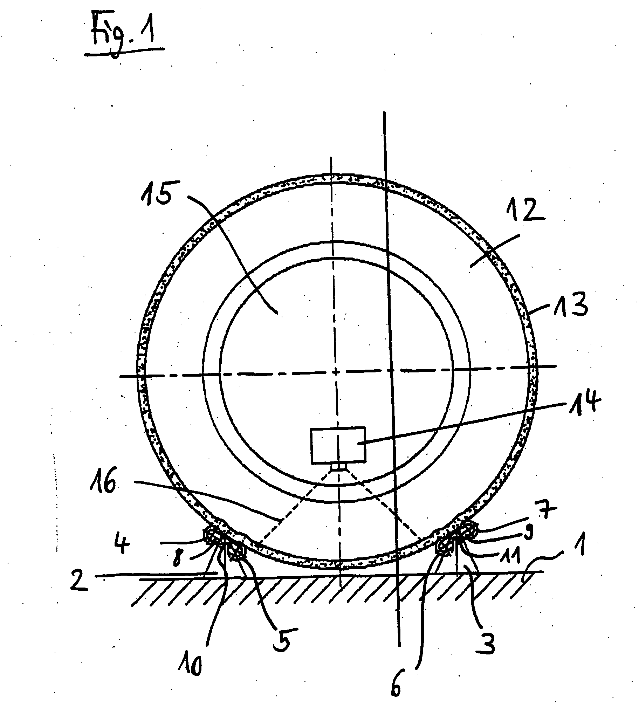

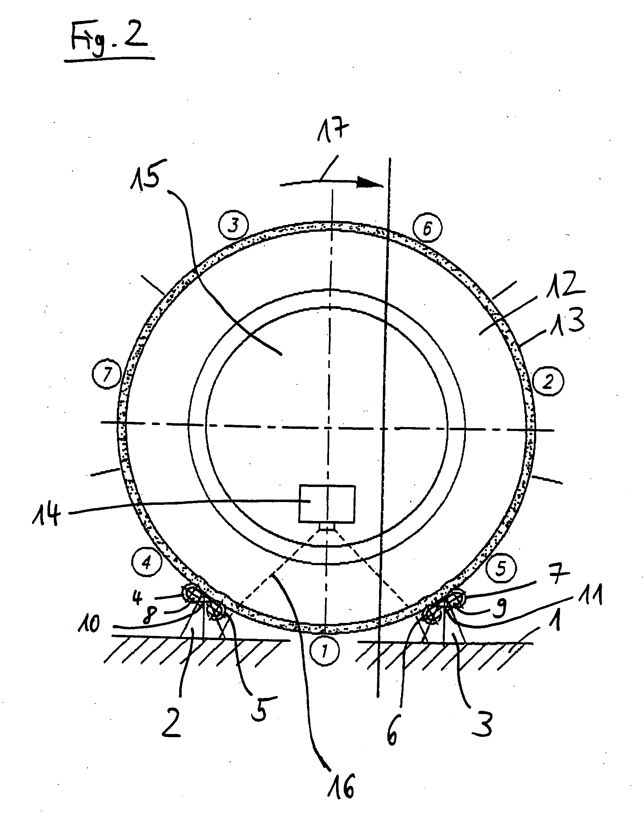

Das Reifenprüfgerät gemäß Fig. 1 und 2 umfaßt ein Gehäuse (in der Zeichnung nicht dargestellt), an dem eine Türe um eine vertikale Achse schwenkbar gelagert ist. An einer mit der Türe verbundenen Grundplatte 1 sind zwei Auflager 2, 3 befestigt, an deren oberen Enden jeweils zwei Rollen 4, 5 und 6, 7 vorgesehen sind. Die Rollen 4-7 sind jeweils um eine horizontale Achse drehbar gelagert. Jeweils zwei Rollen 4, 5 und 6, 7 sind an jeweils einer Wippe 8, 9 vorgesehen, wobei jede Wippe 8, 9 um das zugehörige Auflager 2, 3 um eine ebenfalls horizontale Achse 10, 11 schwenkbar ist. Hierdurch stellt sich die Vorrichtung selbsttätig auf die jeweilige Reifengröße ein.

Der zu prüfende Reifen 12 liegt mit seiner den Außenumfang bildenden Lauffläche 13 auf den Rollen 4-7 auf. Mit dem Gerätegehäuse ist ein Meßkopf 14 verbunden, der in die Öffnung 15 des Reifens hineinragt. Die Rollen 4-7 liegen außerhalb des im wesentlichen ke-gelförmigen Bildausschnitts 16 des Meßkopfes 14. Die Anordnung ist derart ge-troffen, daß der Abstand zwischen den Grenzen des Bildausschnitts 16 und den nächstliegenden Rollen 5, 6 so groß bemessen ist, daß die zu messende Oberflä-che des Reifens 12 von den Verformungen des Reifens an den Auflagerstellen der Rollen 4-7 nicht beeinflußt wird.

Der Reifen 12 ist auf den Rollen 4-7 in senkrechter Lage, also "stehend", positioniert. Er ist nicht auf einer Felge montiert; er wird im unmontierten Zustand geprüft.

Fig. 2 zeigt die Reihenfolge der zu prüfenden Sektoren des Reifens 12. Der im wesentlichen kegelförmige Bildausschnitt 16 überstreicht am Umfang des Reifens 12 einen Winkel von etwa 52°, also etwas mehr als 1/7 des vollen Winkels von 360°, so daß zur vollständigen Erfassung des Umfangs des Reifens 12 7 Aufnahmen erforderlich und ausreichend sind. Die Reihenfolge der Aufnahmen ist in Fig. 2 angegeben.

Wie aus den Figuren ersichtlich, wird der stehende Reifen 12 auf vier Rollen 4-7 an zwei Auflagern 2,3 gelagert, die den Reifen 12 bestmöglich fixieren und gleichzeitig so wenig wie möglich verformen. Außerdem sind die Rollen 4-7 so angeordnet,daß sie den Reifen 12 an Stellen verformen, die nicht im aktuell geprüften Bildausschnitt 16 des Meßkopfes 14 liegen. Die gesamte Lauffläche 13 des Reifens 12 wird dadurch geprüft, daß nacheinander einzelne Sektoren vom Meßkopf 14 erfaßt werden. Dabei wird darauf geachtet, daß der nächste zu prüfende Sektor während der vorangegangenen Prüfung nicht Kontakt zu den Rollen 4-7 hatte. Es wird also nicht der benachbarte Sektor als nächstes geprüft, sondern der übernächste, wie dies in Fig. 2 schematisch dargestellt ist. Der Reifen 12 wird zunächst im Sektor 1 geprüft. Anschließend wird er im Uhrzeigersinn, also in Richtung des Pfeiles 17, gedreht, und zwar über den anschließenden Sektor 5 hinaus zum Sektor 2, der bei der Prüfung des Sektors 1 keinen Kontakt zu den Rollen 4-7 hatte. Anschließend erfolgt die Prüfung des übernächsten Sektors 3, dann die Prüfung des übernächsten Sektors 4 und so weiter über die Sektoren 5 und 6 zum Sektor 7.

Der Reifen kann vom Bediener von Hand ohne zusätzliche Hardware in die Maschine gerollt werden. Die an der Vorderseite des Gerätes vorhandene Türe kann geöffnet werden, wobei die Rollen, auf die der Reifen gerollt werden soll, und der Transportmechanismus, der dazu dient, um den Reifen zu drehen, in die Tür integriert sein können. Dadurch ist es möglich, den Reifen 12 auf einfache Weise in das Reifenprüfgerät zu bringen und trotzdem den bestmöglichen Zugang zu der Prüfoptik, die in dem Meßkopf 14 vorgesehen ist, zu gewährleisten.

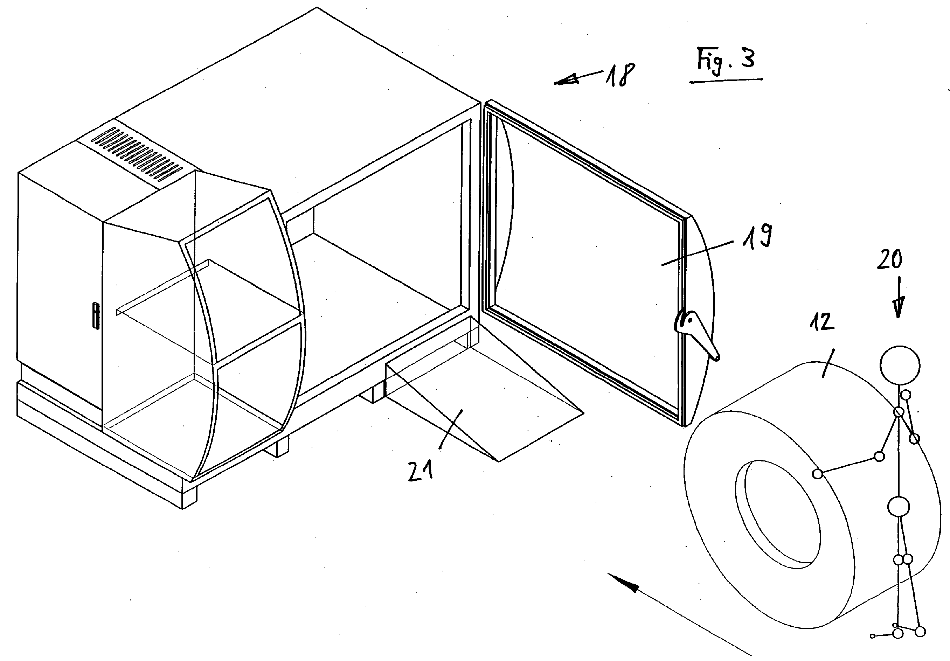

Das in Fig. 3 in einer perspektivischen Darstellung gezeigte Reifenprüfgerät 18 wird manuell beschickt. Es umfasst eine um eine vertikale Achse schwenkbare, rechteckige Türe 19. Der Reifen 12 kann durch eine Person 20 über eine Aufrollrampe 21 in das Reifenprüfgerät 18 hinein und anschließend aus diesem wieder heraus gerollt werden.

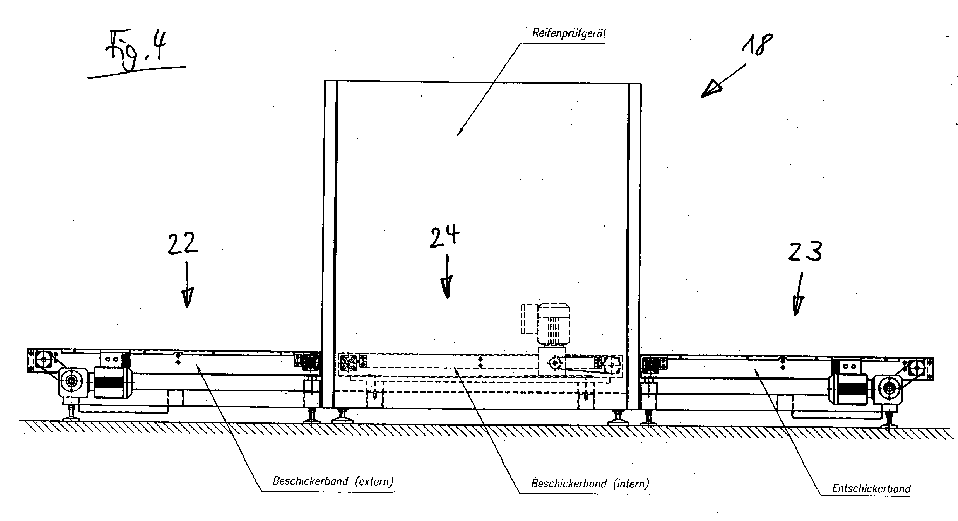

Fig. 4 zeigt ein Reifenprüfgerät 18, das durch ein externes Beschickerband 22 mit einem Reifen beschickt werden kann. Durch ein externes Entschickerband 23, das sich auf der anderen Seite des Reifenprüfgeräts 18 befindet, kann der Reifen (in Fig. 4 nicht dargestellt) wieder aus dem Reifenprüfgerät 18 herausbewegt werden. Innerhalb des Reifenprüfgeräts 18 ist ein internes Beschickerband 24 vorgesehen. Die Bänder 22, 23, 24 fluchten miteinander.

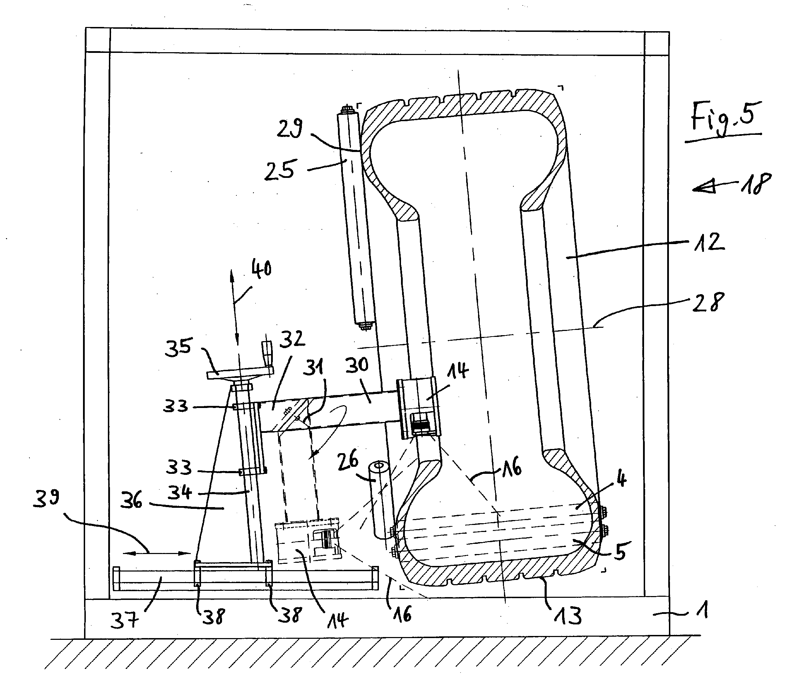

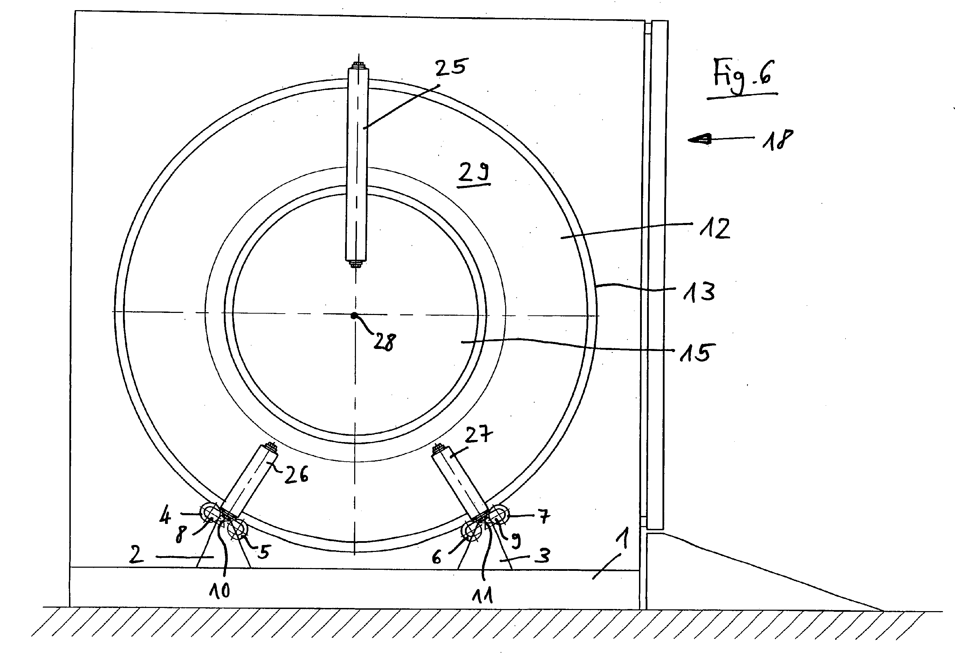

Die Figuren 5 und 6 zeigen ein Reifenprüfgerät 18, in dem der Reifen 12 geringfügig geneigt gelagert ist. Der Reifen 12 ist durch seitliche Führungselemente 25, 26, 27, die als Rollen ausgestaltet sind, abgestützt. Das seitliche Führungselement 25 liegt in der Mitte des oberen Bereichs des Reifens 12 und verläuft annähernd vertikal. Die seitlichen Führungselemente 26, 27 befinden sich oberhalb der horizontalen Achsen 10, 11 der Auflager 2, 3. Sie sind zur Mittenachse 28 des Reifens 12 hin gerichtet. Die seitlichen Führungselemente 25-27 liegen an einer Seitenfläche 29 des Reifens 12 an. Sie rollen bei einer Drehung des Reifens 12 um die Mittenachse 28 an der Seitenfläche 29 ab.

Der Messkopf 14 ist am Ende eines Auslegers 30 angeordnet, der um eine Achse 31 schwenkbar gelagert ist, die in einem Winkel von 45° zur Mittenachse 28 des Reifens 12 verläuft. Der Ausleger 30 ist an dem Ansatz 32 schwenkbar gelagert, der zwei beabstandete Spindelmuttern 33 aufweist, die in das Außengewinde einer Spindel 34 eingreifen. Die Spindel 34 kann durch das Handrad 35 gedreht werden, wodurch der Ansatz 32 und mit ihm der am Ende des Auslegers 30 befindliche Messkopf 14 in Richtung des Doppelpfeils 40 nach oben und unten verfahren werden kann. Die Spindel 34 ist ihrerseits Bestandteil eines Schlittens 36, der durch einen weiteren Spindeltrieb, der aus einer gehäusefesten Spindel 37 und mit dem Schlitten 36 verbundenen Spindelmuttern 38 besteht, in horizontaler Richtung 39 verfahren werden kann. Hierdurch werden für den Messkopf 14 drei Bewegungsmöglichkeiten geschaffen, nämlich eine Bewegung in horizontaler Richtung 39, in vertikaler Richtung 40 und eine Drehung um die Achse 31. Die Bewegungen in horizontaler Richtung 39 und vertikaler Richtung 40 können zur Anpassung an verschiedene Reifengrößen genutzt werden. Durch eine Verschwenkung um die Achse 31 kann der Messkopf 14 aus der durchgezogen gezeichneten Stellung in die gestrichelte Stellung gebracht werden, so dass verschiedene Bereiche des Reifens 12 geprüft werden können. Um den gesamten Umfang des Reifens 12 zu prüfen, kann der Reifen 12 gegenüber den Meßkopf 14 gedreht werden. Stattdessen oder zusätzlich könnte die Anordnung allerdings auch derart getroffen sein, daß der Meßkopf 14 um den Reifen 12 herum gedreht wird (in der Zeichnung nicht dargestellt).

Die seitlichen Führungselemente 25-27 dienen dazu, den Reifen 12 zu fixieren und eventuelle Schwingungen zu dämpfen. Die Dämpfung kann allerdings auch durch zusätzliche Elemente (in der Zeichnung nicht dargestellt) erreicht werden, wie etwa Bänder oder Lappen aus unterschiedlichen Elementen.

Es ist ferner möglich, die für die Prüfung des Reifens erforderlichen Laserlichtquellen vom Messkopf getrennt zu befestigen. Dies erfolgt vorzugsweise derart, dass der Beleuchtungsstrahl der Laserlichtquellen mit der optischen Achse der Bildaufnahmeeinheit des Messkopfes einen Winkel zwischen 0 und 90° einschließt, beispielsweise 30°.

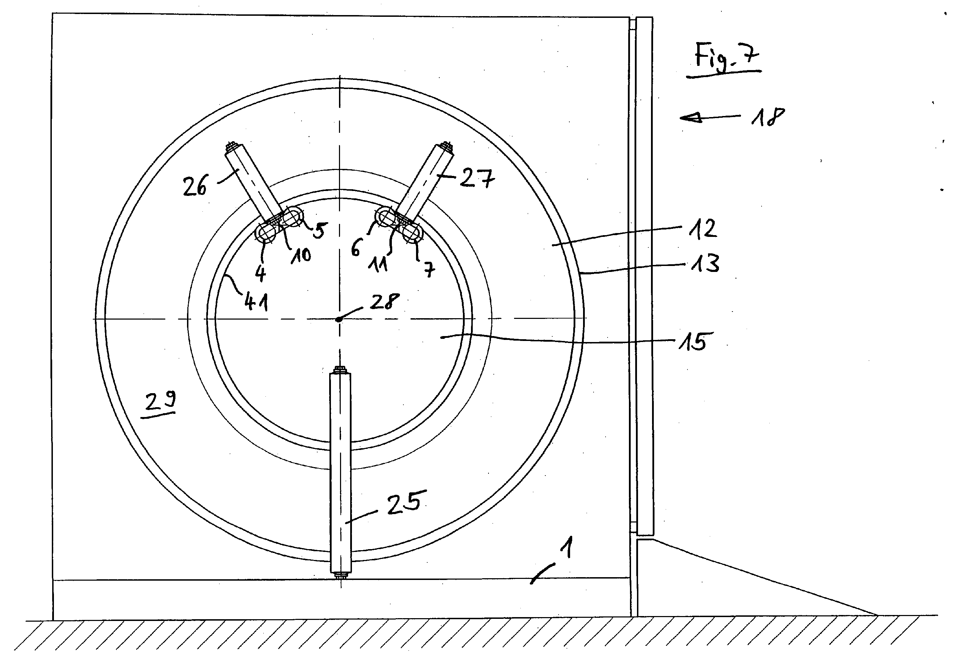

In der Fig. 7 ist eine Ausführungsform gezeigt, in der der Reifen 12 nicht mit seiner Lauffläche 13 auf den Rollen 4-7 aufliegt, sondern mit seiner Wulst 41. Die Rollen 4-7 befinden sich im oberen Bereich der Öffnung 15 des Reifens 12. Die seitlichen Führungselemente 25-27 sind spiegelverkehrt angeordnet: Das vertikale Führungselement 25 befindet sich im unteren Bereich des Reifens 12, und die beiden oberhalb der horizontalen Achsen 10, 11 der Auflager 2, 3 angeordneten seitlichen Führungselemente 26, 27 befinden sich im oberen Bereich des Reifens 12.

Die Ausführungsformen nach den Figuren 6 und 7 können auch miteinander kombiniert werden (in der Zeichnung nicht dargestellt). Der Reifen 12 kann also sowohl durch Rollen unterstützt werden, auf denen die Lauffläche 13 des Reifens 12 aufliegt, als auch durch Rollen, auf denen die Wulst 41 des Reifens 12 aufliegt. Durch Rollen, die den Reifen 12 an der Wulst 41 unterstützen, wird die Lauffläche 13 des Reifens 12 nicht verformt oder weniger verformt, wodurch bessere Messergebnisse erzielt werden können. Es ist allerdings möglich, dass dann das Positionieren des Reifens 12 aufwendiger wird.

Die Luftzuführung in die Druckkammer kann auf minimale Strömungsgeschwindigkeit optimiert werden. Verbleibende Störungen können mit gängigen Bildverarbeitungsalgorithmen durch Glättung und Hochpaßfilterung in der weiterführenden Bildauswertung eliminiert werden.

Durch die Erfindung wird ein Prüfgerät für stehende Reifen mit einer Druckkammer bzw. Unterdruckkammer und einem oder mehreren Meßköpfen, insbesondere holografischen oder shearografischen Meßköpfen, geschaffen. Der oder die Meßköpfe umfassen eine Bildaufnahmeeinheit. Sie können eine Beleuchtungseinheit umfassen, in der eine oder mehrere Lichtquellen, insbesondere hinreichend kohärente Lichtquellen wie beispielsweise Laserlichtquellen, insbesondere Laserdioden, vorhanden sein können. Diese Laserlichtquellen können auch vom Messkopf getrennt befestigt sein, so dass ihr Beleuchtungsstrahl mit der optischen Achse der Bildaufnahmeeinheit einen Winkel zwischen 0 und 90° einschließt, beispielsweise 30°. Die waagrechten Rollen, auf denen der Reifen positionierbar ist bzw. gelagert wird, können auch zum Drehen des Reifens dienen. In dem Prüfgerät kann eine seitliche Führung für den in leichter Schräglage stehenden Reifen vorhanden sein, die durch senkrechte Rollen, Kugeln, Bürsten oder ähnliches realisiert werden kann. Diese seitliche Führung dient dazu, den Reifen zu fixieren und eventuelle Schwingungen zu dämpfen. Die Dämpfung kann auch durch zusätzliche Elemente erreicht werden, wie etwa Bänder oder Lappen aus unterschiedlichen Materialien. Vorzugsweise ist die Reifenlagerung in einer Türe des Prüfgeräts integriert. An dem Gerät oder am Boden vor dem Gerät kann sich eine Aufrollrampe zum einfachen Beschicken des Prüfgeräts mit dem Reifen befinden, wobei der Reifen von Hand oder automatisch beschickt werden kann. In dem Prüfgerät kann eine manuelle oder motorische Verstellmöglichkeit des Meßkopfes bzw. der Meßköpfe zur Prüfung der Lauffläche des Reifens und/oder eine manuelle oder motorische Verstellmöglichkeit des Meßkopfes bzw. der Meßköpfe zur Prüfung der Seitenwand des Reifens vorhanden sein. In dem Prüfgerät oder in einem angeschlossenen Datenverarbeitungsgerät, insbesondere einem PC, kann eine Auswertesoftware zur Unterdrückung von Störungen durch Filteroperationen nach dem Stand der Technik, wie beispielsweise eine Hochpaßfilterung oder eine Tiefpaßfilterung, vorhanden sein.

## Patentansprüche

1. Reifenprüfgerät mit einer Druckkammer und einem Meßkopf (14),
**dadurch gekennzeichnet,**
**daß** das Reifenprüfgerät waagrechte Rollen (4, 5, 6, 7) aufweist, auf die der Reifen (12) in senkrechter Lage positionierbar ist.

2. Reifenprüfgerät nach Anspruch 1, **dadurch gekennzeichnet, daß** zwei beabstandete Auflager (2, 3) vorgesehen sind.

3. Reifenprüfgerät nach Anspruch 2, **dadurch gekennzeichnet, daß** für eines oder beide Auflager (2, 3) jeweils mehrere, vorzugsweise zwei Rollen (4-7) vorgesehen sind.

4. Reifenprüfgerät nach Anspruch 3, **dadurch gekennzeichnet, daß** die Rollen (4-7) eines oder beider Auflager (2, 3) schwenkbar (10, 11) sind.

5. Reifenprüfgerät nach einem der vorhergehenden Ansprüche, **dadurch gekennzeichnet, daß** die Rollen (4-7) außerhalb des Bildausschnitts (16) des Meßkopfes (14) liegen.

6. Reifenprüfgerät nach einem der vorhergehenden Ansprüche, **dadurch gekennzeichnet, dass** der Reifen (12) mit seiner Lauffläche (13) auf den Rollen (4-7) aufliegt.

7. Reifenprüfgerät nach einem der vorhergehenden Ansprüche, **dadurch gekennzeichnet, dass** der Reifen mit seiner Wulst (41) auf den Rollen (4-7) aufliegt.

8. Reifenprüfgerät nach einem der vorhergehenden Ansprüche, **dadurch gekennzeichnet, daß** das Reifenprüfgerät eine Türe umfaßt und daß die Rollen (4-7) in der Türe vorgesehen sind.

9. Reifenprüfgerät nach Anspruch 8, **dadurch gekennzeichnet, daß** die Türe schwenkbar ist.

10. Reifenprüfgerät nach einem der vorhergehenden Ansprüche, **gekennzeichnet durch** eines oder mehrere insbesondere waagrechte Förderbänder (22, 23, 24).

11. Reifenprüfgerät nach einem der vorhergehenden Ansprüche, **gekennzeichnet durch** eines oder mehrere seitliche Führungselemente (25, 26, 27) für den Reifen (12).

12. Reifenprüfgerät nach einem der vorhergehenden Ansprüche, **gekennzeichnet durch** eines oder mehrere Dämpfungselemente.

13. Reifenprüfgerät nach einem der vorhergehenden Ansprüche, **dadurch gekennzeichnet, dass** der Messkopf (14) eine oder mehrere Laserlichtquellen, insbesondere Laserdioden, aufweist.

14. Reifenprüfgerät nach einem der vorhergehenden Ansprüche, **dadurch gekennzeichnet, dass** die Laserlichtquellen, insbesondere Laserdioden, vom Messkopf (14) getrennt angeordnet sind.

15. Reifenprüfgerät nach einem der vorhergehenden Ansprüche, **dadurch gekennzeichnet, daß** der Meßkopf (14) zur Prüfung der Lauffläche (13) und/oder der Seitenwand (29) des Reifens (12) verstellbar ist.

16. Reifenprüfgerät nach einem der vorhergehenden Ansprüche, **gekennzeichnet durch** mehrere Messköpfe.
